# EUROPÄISCHE PATENTSCHRIFT

(11) **EP 1 083 943 B1**
(45) Veröffentlichungstag und Bekanntmachung des Hinweises auf die Patenterteilung: **11.06.2003**
(21) Anmeldenummer: 99915618.5
(22) Anmeldetag: 16.03.1999
(51) Int. Cl.: A61L 2/10

(54) **Vorrichtung zum Entkeimen von Wasser mit einer UV-Lampe und Kalibriervorrichtung hierzu**
Device for degerminating water having an UV lamp and calibration device therefor
Dispositif pour désinfecter de l'eau avec une lampe U.V. et dispositif de calibration

(30) Priorität: 30.05.1998 DE 19824423
(43) Veröffentlichungstag der Anmeldung: 21.03.2001
(73) Patentinhaber: HANSA METALLWERKE AG, 70567 Stuttgart (DE)
(72) Erfinder: KUNKEL, Horst, D-70499 Stuttgart (DE)
(74) Vertreter: Ostertag, Reinhard
(86) Internationale Anmeldenummer: EP9901704
(87) Internationale Veröffentlichungsnummer: WO99062567

(56) Entgegenhaltungen:
- WO-A-96/09249
- GB-A- 2 136 112
- US-A- 4 849 115
- US-A- 5 019 256
- US-A- 5 034 663

## Beschreibung

Die Erfindung betrifft eine Vorrichtung zum Entkeimen von Wasser, welches eine Sanitäreinrichtung durchströmt, nach dem Oberbegriff des Patentanspruches 1 sowie eine Kalibriervorrichtung hierfür.

In den letzten Jahren sind die Gefahren, die von Mikroorganismen, insbesondere Bakterien, Amöben oder anderen Einzellern, verunreinigtem Wasser im Sanitärbereich ausgehen, zunehmend deutlicher geworden. Der Entkeimung von Wasser wird daher eine erhöhte Bedeutung beigemessen. In diesem Zusammenhang wurde von Versuchen berichtet, strömendes Wasser durch Bestrahlung mit UV-Licht zu entkeimen, dessen Wellenlänge geeignet ist, im Wasser mitgeführte Mikroorganismen abzutöten. Ein Problem dabei ist, daß die hierfür eingesetzten UV-Lampen einer natürlichen Alterung ausgesetzt sind. Diese Alterung, die mit einer Abnahme der ausgesandten Lichtintensität einhergeht, hängt in erheblichem Umfang von der Anzahl der Schaltzyklen ab, welche die Lampe durchlaufen hat. Daher ist eine generelle Aussage darüber, nach welcher Betriebsdauer die Lampe nicht mehr die zur zuverlässigen Entkeimung erforderliche Lichtintensität ausstrahlt, nicht möglich.

Vorrichtungen der im Oberbegriff des Anspruches 1 genannten Art sind aus der US-A-5 019 256, der GB-A-2 136 112 und der US-A-4 849 115 bekannt. Stellt bei diesen die Schaltungsanordnung fest, daß der vom Sensor gemessene Wert der Lichtintensität unter einen zulässigen Minimalwert abfällt, wird Alarm gegeben und ggfs. der Wasserfluß zum Stillstand gebracht. Unabhängig davon, nach welcher Betriebsdauer dies geschieht, und unabhängig von dem Mechanismus, der zu der unzureichenden Lichtintensität der UV-Lampe geführt hat, wird also derjenige gefährliche Zustand vermieden, bei welchem die Entkeimung aufgrund fehlender Lichtintensität nicht mehr vollständig ist. Dies ist aus hygienischen Gründen unerläßlich.

Bei den bekannten Vorrichtungen wird der Benutzer zwar auf eine nicht mehr ausreichende Lichtintensität aufmerksam gemacht; eine gleiche Entkeimungseffizienz im Verlauf der Zeit ist dabei jedoch nicht gewährleistet.

Aufgabe der vorliegenden Erfindung ist es, eine Vorrichtung der eingangs genannten Art so auszugestalten, daß während der gesamten Betriebszeit eine gleichmäßige Entkeimungswirkung erzielt wird.

Diese Aufgabe wird durch die im Patentanspruch 1 angegebenen Mittel gelöst.

Bei der erfindungsgemäßen Ausgestaltung der Vorrichtung wird bei Alterung der UV-Lampe der hiermit verbundene Abfall der Lichtintensität durch Nachregeln der Betriebsspannung der UV-Lampe kompensiert. Die UV-Lampe strahlt also immer mit derselben Intensität, die auf eine ausreichende aber auch nicht überdosierte Entkeimung des durchströmenden Wassers ausgelegt ist. Erst wenn dieser Nachregelprozeß nicht mehr funktioniert, fällt die Lichtintensität, die von der UV-Lampe abgegeben wird, weiter auf den oben erwähnten Minimalwert ab, bei der dann der Alarm ausgelöst wird.

Aus Gründen der Unfallsicherheit empfiehlt sich, daß die Schaltungsanordnung durch einen Trenntransformator galvanisch in zwei Teile getrennt ist, von denen der eine stationär mit dem Entkeimungsreaktor und der andere baueinheitlich mit der entnehmbaren UV-Lampe verbunden ist. Die galvanische Trennung erfolgt dann in der Weise, daß die Primärwicklung des Trenntransformators an dem Entkeimungsreaktor, die Sekundärwicklung dagegen an der Baueinheit angeordnet ist, welche die entnehmbare UV-Lampe umfaßt.

Bei dieser galvanisch getrennten Ausführungsform der Schaltungsanordnung zeichnet sich wiederum diejenige Ausgestaltung als besonders vorteilhaft aus, bei welcher
a) der Sensor sich in dem baueinheitlich mit der UV-Lampe verbundenen Teil der Schaltungsanordnung befindet;
b) die Vergleichseinrichtung in dem baueinheitlich mit der UV-Lampe verbundenen Schaltungsteil vorgesehen und als erster Mikroprozessor ausgebildet ist, welcher mit einer ersten Schaltungskomponente verbunden ist, die über die galvanische Trennung hinweg Informationssignale über das Ergebnis der in dem ersten Mikroprozessor geführten Vergleiche aussendet;
c) in dem stationär mit dem Entkeimungsreaktor verbundenen Teil der Schaltungsanordnung ein zweiter Mikroprozessor vorgesehen ist, der als die das Alarmsignal erzeugende Einrichtung und/oder als Nachführeinrichtung dient und mit einer zweiten Schaltungskomponente in Verbindung steht, welche die von der ersten Schaltungskomponente ausgesandten Informationssignale empfängt.

Bei dieser Ausführungsform gehören also der Sensor und die UV-Lampe baueinheitlich zusammen, damit sie gegebenenfalls auch baueinheitlich kalibriert werden können. Dies setzt allerdings voraus, daß die Meßergebnisse, die in der Vergleichseinrichtung gewonnen werden, über die galvanische Trennung hinweg vermittelt werden können. Hierzu sind die beiden Informationssignal-verarbeitenden Schaltungskomponenten beidseits der galvanischen Trennung vorgesehen. Sowohl die Vergleichseinrichtung in dem baueinheitlich mit der UV-Lampe verbundenen Schaltungsteil als auch die das Alarmsignal erzeugende Einrichtung bzw. die Nachführeinrichtung sind dann zweckmäßig als programmierbare Mikroprozessoren ausgestaltet.

Nach einem besonders bevorzugten Ausführungsbeispiel dieser Vorrichtung enthält die Schaltungsanordnung in dem baueinheitlich mit der UV-Lampe verbundenen Teil zusätzlich eine dritte Schaltungskomponente, welche über die galvanische Trennung hinweg Informationssignale empfangen kann und mit dem ersten Mikroprozessor verbunden ist, wobei der erste Mikroprozessor so programmiert ist, daß er den momentan vom Sensor gemessenen Wert in den Speicher einliest, wenn er von der dritten Schaltungskomponente ein entsprechendes Signal erhält. Diese Ausgestaltung der Erfindung eröffnet die Möglichkeit, die die UV-Lampe und den Sensor umfassende Baueinheit werksseitig zu kalibrieren: Über die dritte Informationssignal-verarbeitende Schaltungskomponente kann nämlich in diese Baueinheit der Befehl eingespeist werden, den momentan vom Sensor gemessenen Wert in dem Speicher abzulegen.

Die Signale, welche diesen Abspeicherprozeß auslösen, werden in einer besonderen Kalibriervorrichtung erzeugt, die nur werksseitig vorhanden zu sein braucht und zur Kalibrierung der die UV-Lampe umfassenden Baueinheit verwendet wird. Diese Kalibriervorrichtung ist in Anspruch 5 angegeben.

Erfindungsgemäß werden also mit Hilfe eines geeichten Sensors für jede gefertigte Baueinheit individuell diejenigen Betriebsparameter der UV-Lampe eingestellt, die dem gewünschten Sollwert und dem gerade noch zulässigen Minimalwert der Lichtintensität entsprechen. Die diesen Betriebsparametern entsprechenden Meßwerte des in die mit der UV-Lampe verbundenen Schaltungsteils eingebauten (nicht geeichten) Sensors werden dann in dem Speicher abgelegt, so daß die hier abgelegten Werte für die kalibrierte Baueinheit einen Maßstab für die absolute Sollund Mindest-Lichtintensität darstellt.

Die Informationssignal-verarbeitenden Schaltungskomponenten können IR-Sender bzw. IR-Empfänger sein. Alternativ kommen hierfür auch Modulatoren bzw. Demodulatoren in Betracht, welche jeweils über Hochpaßfilter galvanisch mit der Primär- bzw. Sekundärwicklung des Trenntransformators verbunden sind.

Ausführungsbeispiele der Erfindung werden nachfolgend anhand der Zeichnung näher erläutert; es zeigen
Figur 1 das Blockschaltbild einer ersten Ausführungsform einer Schaltungsanordnung zum Betreiben einer UV-Lampe;
Figur 2 ein zweites Ausführungsbeispiel einer derartigen Schaltungsanordnung.

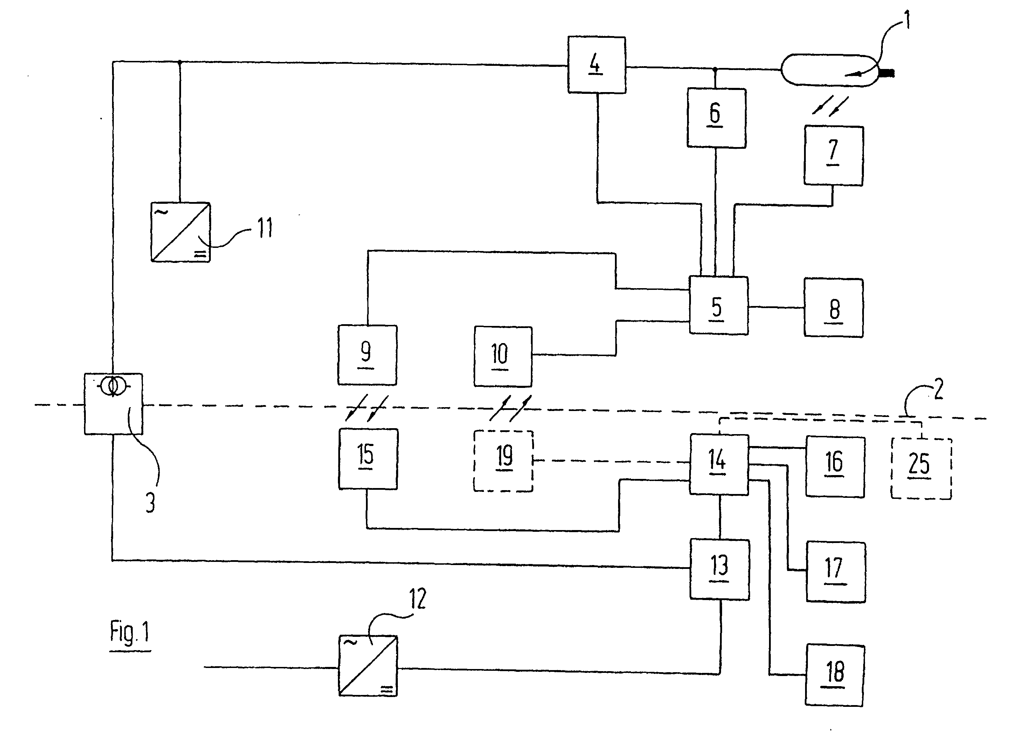

Die in Figur 1 dargestellte Schaltungsanordnung dient zum Betreiben einer UV-Lampe, die in dieser Figur das Bezugszeichen 1 trägt und Teil eines Entkeimungsreaktors ist, mit welchem Wasser, welches durch eine Sanitäreinrichtung strömt, entkeimt wird. Die Schaltungsanordnung läßt sich grob in zwei Teile unterteilen, die voneinander getrennt sind: Die oberhalb der Trennungslinie 2 (gestrichelt dargestellt) angeordneten Schaltungskomponenten befinden sich in einer die UV-Lampe 1 umfassenden Baueinheit, die werksseitig vormontiert und sodann austauschbar in dem Entkeimungsreaktor angeordnet wird. Die verschiedenen Schaltungskomponenten, die nachfolgend im einzelnen beschrieben sind und Teil dieser Baueinheit sind, können wiederverwendet werden, wenn diese Baueinheit nach dem Ende der Lebensdauer der UV-Lampe 1 in das Werk eingesandt wird. Diese Baukomponenten befinden sich vorzugsweise im Sockelbereich der UV-Lampe 1.

Die unterhalb der Trennungslinie 2 in Figur 1 dargestellten Schaltungskomponenten sind stationär z.B. in der Lampenfassung des Entkeimungsreaktors angeordnet, verbleiben also in diesem, wenn die die UV-Lampe 1 umfassende Baueinheit ausgetauscht wird.

Die beiden Schaltungsteile sind galvanisch voneinander getrennt. Hierzu ist ein Trenntransformator 3 vorgesehen, dessen Primärwicklung sich im Bereich der Lampenfassung des Entkeimungsreaktors und dessen Sekundärwicklung sich im Bereich des Lampensockels der austauschbaren UV-Lampe 1 befindet. Diese galvanische Trennung stellt eine Sicherheitseinrichtung für den Benutzer dar.

Zunächst wird die oberhalb der Trennlinie 2 in Figur 1 dargestellte Schaltung näher beschrieben:

Die Sekundärwicklung des Trenntransformators 3 ist über einen Stromsensor 4 mit der UV-Lampe 1 verbunden. Der Stromsensor 4 gibt ein den gemessenen Stromwert entsprechendes Ausgangsignal an einen Mikroprozessor 5 ab, welcher die zentrale Steuerung dieses Schaltungsteiles in weiter unten näher beschriebener Weise bildet. Ein Spannungssensor 6 ermittelt die an der UV-Lampe 1 liegende Betriebsspannung und führt ein dieser Betriebsspannung entsprechendes Ausgangssignal ebenfalls dem Mikroprozessor 5 zu.

Im Bereich des Sockels der UV-Lampe 1 ist, z.B. in Sichtverbindung über den Glasfuß dieser UV-Lampe 1, ein UVC-Sensor 7 integriert. Auch dessen Ausgangssignal wird dem Mikroprozessor 5 zugeleitet.

Der Mikroprozessor 5 steht außerdem in Datenaustausch mit einem Speicher (EEPROM) 8 und erzeugt Ausgangssignale, welche einem IR-Sender 9 zugeführt werden. Alternativ empfängt der Mikroprozessor 5 die Ausgangssignale eines IR-Empfängers 10, welche der Mikroprozessor 5 mit einer nachfolgend beschriebenen Logik zur Belegung des Speichers 8 nutzt.

Die Betriebsspannungen für die verschiedenen Schaltungskomponenten 4 bis 10 werden von einer Stromversorgung 11 erzeugt, die ebenfalls mit der Sekundärwicklung des Trenntransformators 3 verbunden ist. Die verschiedenen Verbindungsleitungen sind in Figur 1 der Übersichtlichkeit halber nicht eingezeichnet.

Der in Figur 1 unterhalb der Trennlinie 2 liegende, stationär im Entkeimungsreaktor verbleibende Schaltungsteil umfaßt folgende Schaltungskomponenten:

Eine Stromversorgung 11 ist eingangsseitig mit der Netzspannung und ausgangsseitig mit einem elektronischen Vorschaltgerät 12 verbunden, welches die zum Betrieb der UV-Lampe 1 verforderliche Betriebsspannung in an und für sich bekannter Weise erzeugt. Der Ausgang des elektronischen Vorschaltgerätes 13 ist mit der Primärwicklung des Trenntransformators 3 verbunden.

Auch der stationäre Schaltungsteil umfaßt als steuerndes Element einen Mikroprozessor 14, dem Eingangssignale von einem mit dem IR-Sender 9 in Sichtverbindung stehenden IR-Empfänger 15 und von einer Detektionselektronik 16 zugeführt werden. Umgekehrt gibt der Mikroprozessor 14 Ausgangssignale an eine Treiberschaltung 17 für das den Wasserstrom durch den Entkeimungsreaktor steuernde Magnetventil, an das elektronische Vorschaltgerät 13 sowie an eine Alarmeinrichtung 18 ab.

In Figur 1 sind außerdem gestrichelt ein mit dem IR-Empfänger 10 in Sichtverbindung stehender IR-Sender 19 und ein geeichter UV-Sensor 25 dargestellt, die jedoch nicht Teil der im Entkeimungsreaktor vorgesehenen Schaltungsanordnung sind; diese Schaltungskomponenten werden, wie weiter unten noch erläutert wird, in einer werksseitig benutzten Schaltung zum Bestimmen der charakteristischen Daten und individuellen Abgleich der jeweils ausgelieferten UV-Lampen eingesetzt.

Die oben beschriebene Schaltungsanordnung arbeitet wie folgt:

Wenn die Detektionselektronik 16, die irgend einen bekannten Annäherungsschalter, z.B. eine IR-Reflexionslichtschranke, enthält, die Anwesenheit eines Benutzers im Bereich der Sanitäreinrichtung feststellt, so gibt sie ein entsprechendes Ausgangssignal an den Mikroprozessor 14 ab. Dieser setzt sodann das elektronische Vorschaltgerät 13 in Betrieb, welches über den Trenntransformator 3 die UV-Lampe 1 zündet und zum Brennen bringt. Außerdem gibt der Mikroprozessor 14 an die Treiberschaltung 17 ein Einschaltsignal, so daß das den Wasserstrom beherrschende Magnetventil geöffnet wird. Die Sanitäreinrichtung ist nunmehr in Betrieb, wobei das durchströmende Wasser kontinuierlich von UVC-Licht, das von der UV-Lampe 1 ausgeht, entkeimt wird.

Die von der UV-Lampe 1 abgegebene Strahlungsleistung wird direkt von dem UVC-Sensor 7 gemessen und dem Mikroprozessor 5 mitgeteilt.

Im Speicher 8 sind in einer weiter unten beschriebenen Weise mindestens zwei Werte abgespeichert: Der eine dieser Werte steht für eine Sollintensität der von der UV-Lampe 1 ausgestrahlte Lichtstrahlung, der zweite für einen Minimalwert, der zur Erzielung einer zuverlässigen Entkeimung nicht unterschritten werden darf.

Zunächst sei der Fall betrachtet, daß durch einen Alterungsprozeß der UV-Lampe 1 diese nicht mehr dieselbe Lichtintensität aussendet wie im Neuzustand. Diesen Abfall der Lichtintensität stellt der Mikroprozessor 5 durch Vergleich des von dem UVC-Sensor 7 zugelieferten Wertes mit dem im Speicher 8 abgespeicherten Sollwert fest. Der Mikroprozessor 5 gibt nunmehr an den IR-Sender 9 ein Signal ab, welches dieser in modulierte IR-Strahlung umwandelt. Diese wird vom IR-Empfänger 15 im stationären Teil der Schaltungsanordnung unterhalb der Trennlinie 2 empfangen und dem Mikroprozessor 14 zugeführt. Der Mikroprozessor 14 beaufschlagt jetzt das elektronische Vorschaltgerät 13 so, daß dessen Ausgangsspannung angehoben und so die Lichtintensität, die von der UV-Lampe 1 ausgeht, wieder auf den Sollwert angehoben wird.

Schreitet nunmehr der Alterungsprozeß der UV-Lampe 1 fort, gelingt es schließlich nicht mehr, durch Hochfahren der Ausgangsspannung des elektronischen Vorschaltgerätes 13 den Sollwert der Lichtintensität aufrecht zu erhalten. Sinkt nunmehr die vom UVC-Sensor 7 gemessene Lichtintensität unter den im Speicher 8 abgelegten Minimalwert ab, so moduliert der Mikroprozessor 5 den IR-Sender 9 in besonderer Weise: Das vom IR-Empfänger 15 in diesem Falle dem Mikroprozessor 14 zugeleitete Signal veranlaßt den Mikroprozessor 14, zum einen ein Abschaltsignal an die Treiberschaltung 17 auszugeben, so daß der weitere Wasserfluß sofort gestoppt wird. Es kann also kein nicht ausreichend entkeimtes Wasser über die Sanitäreinrichtung abgegeben werden. zum anderen wird die Alarmeinrichtung 18 aktiviert, so daß der Fehler akustisch oder visuell dem Benutzer zur Kenntnis gebracht wird.

Um einen Zustand, in dem die UV-Lampe 1 fehlt, von einem Zustand unterscheiden zu können, in dem die UV-Lampe 1 ihre Lebensdauer überschritten hat, kann entweder die Verbindung zwischen dem Sockel der UV-Lampe 1 und der stationären Lampenfassung einen entsprechenden Kontakt aufweisen, der bei eingesetzter UV-Lampe geschlossen ist, oder es wird die Stromaufnahme der Schaltungsanordnung in geeigneter Weise überwacht, die bei eingesetzter UV-Lampe 1 einen charakteristischen Wert aufweist.

Die im Speicher 8 des "mobilen" Schaltungsteiles abgespeicherten beiden Werte werden werksseitig für jede Baueinheit, welche eine UV-Lampe 1 und die oberhalb der Trennlinie 2 dargestellten Schaltungskomponenten umfaßt, in einem "Initialisierungs- und Kalibrierungsvorgang" eingegeben.

Dieser Initialisierungsvorgang findet gleichzeitig mit der ohnehin erforderlichen Prüfung der UV-Lampe 1 statt, so daß die nachfolgend beschriebenen Vorgänge keinen besonderen Aufwand erforderlich machen.

Die zur Eingabe der fraglichen Werte in den Speicher 8 werksseitig erforderliche Schaltung entspricht der oben bereits beschriebenen, unterhalb der Trennlinie 2 liegenden Schaltung, diesmal aber ergänzt durch den gestrichelt dargestellten IR-Sender 19 und den ebenfalls gestrichelt gezeichneten externen, geeichten UVC-Sensor 25. Dieser steht in einer definierten geometrischen Beziehung zu der in der Meßvorrichtung eingesetzten UV-Lampe 1. Mit diesem externen, geeichten UVC-Sensor 25 wird die von der jeweilig vermessenen UV-Lampe 1 ausgesandte Strahlungsintensität im Neuzustand vermessen. Sie wird dadurch auf einen vorgegebenen Wert gebracht, daß mit Hilfe des Mikroprozessors 14 die von dem elektronischen Vorschaltgerät 13 abgegebene Betriebsspannung auf einen entsprechend hohen Wert gebracht wird. Ist dieser Wert erreicht, so gibt der Mikroprozessor 14 an den IR-Sender 19 ein Signal ab. Der IR-Sender 19 wandelt dieses Signal in IR-Strahlung um, welche vom IR-Empfänger 10 empfangen und dem Mikroprozessor 5 des "mobilen" Schaltungsteiles zugeleitet wird. Beim Empfang dieses Signales sorgt der Mikroprozessor 5 dafür, daß der in diesem Augenblick vom (eingebauten) UVC-Sensor 7 gemessene Wert im Speicher 8 als "Sollwert" abgespeichert wird.

Sodann wird mit Hilfe des Mikroprozessors 14 die Ausgangsspannung des elektronischen Vorschaltgerätes 13 abgesenkt, wobei die von der vermessenen UV-Lampe 1 ausgesandte Lichtintensität absinkt. Mit Hilfe des externen, geeichten UVC-Sensors 25 wird die unterste zulässige Grenze der Lichtintensität ermittelt. Ist diese erreicht, so veranlaßt der Mikroprozessor 14 erneut, daß der IR-Sender 19 ein IR-Signal an den IR-Empfänger 10 übermittelt. Letzterer beaufschlagt nunmehr den Mikroprozessor 5 im "mobilen" Teil der Schaltungsanordnung, welcher hierauf den momentanen, vom (eingebauten) UVC-Sensor 7 gemessenen Wert im Speicher 8 ablegt.

Nunmehr ist die vermessene Baueinheit, welche eine (neue) UV-Lampe 1 und (gegebenenfalls wiederverwendete) weitere Schaltungskomponenten umfaßt, bereit zur Auslieferung. Sie kann dann nach dem Einsetzen in die Lampenfassung des Entkeimungsreaktors in der oben beschriebenen Weise betrieben werden.

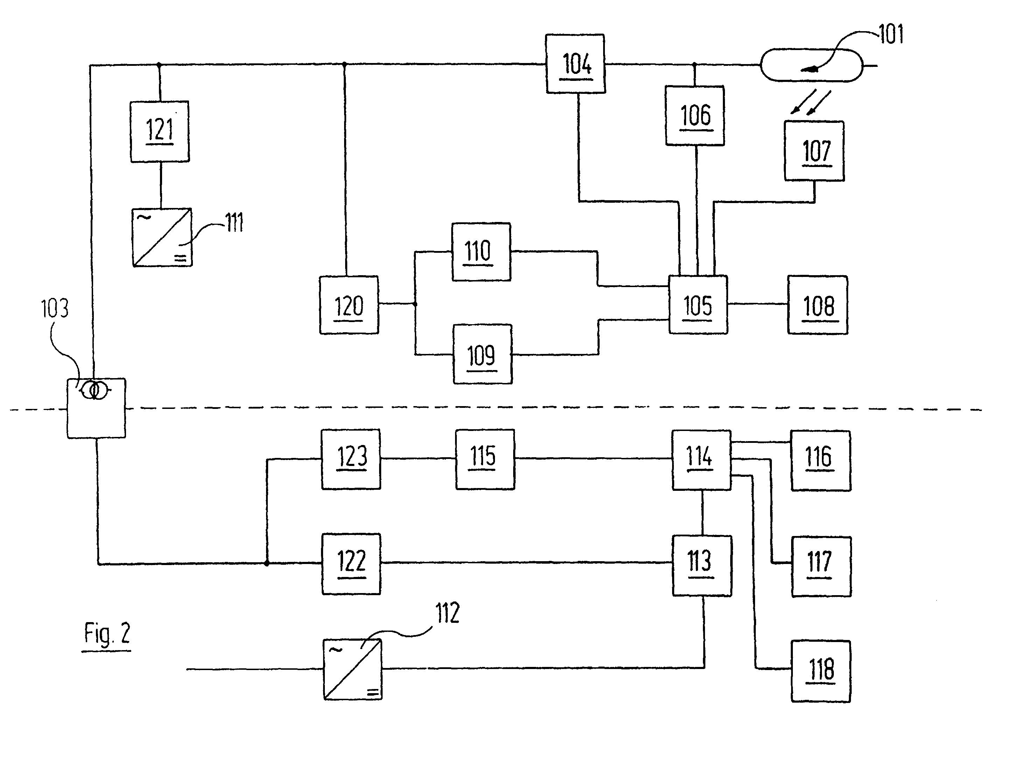

In Figur 2 ist ein zweites Ausführungsbeispiel einer Schaltungsanordnung zum Betreiben einer UV-Lampe beschrieben, welches dem oben erörterten sehr ähnelt. Entsprechende Teile sind daher mit demselben Bezugszeichen zuzüglich 100 gekennzeichnet und werden nachfolgend nicht nocheinmal beschrieben.

Die Unterschiede zwischen den Schaltungsanordnungen der Figuren 1 und 2 erklären sich im wesentlichen aus den Unterschieden, in denen - galvanisch getrennt - die Informationssignale zwischen dem stationären und dem mobilen Teil der Schaltungsanordnung übermittelt werden. Während dies beim Ausführungsbeispiel von Figur 1 über die IR-Sender 9, 19 und die IR-Empfänger 10, 15 geschah, erfolgt die Informationsübertragung beim Ausführungsbeispiel von Figur 2 durch Aufmodulation auf die Spannungen, die über den Trenntransformator 103 übertragen werden.

Zu diesem Zwecke sind in der Schaltungsanordnung von Figur 2 folgende Änderungen gegenüber der Schaltungsanordnung von Figur 1 vorgenommen:

Der IR-Sender 9 ist durch einen Modulator 109 ersetzt; statt des IR-Empfängers 10 weist die Schaltungsanordnung von Figur 2 einen Demodulator 110 auf. Die Dateneinkopplung bzw. Auskopplung in die bzw. aus der Sekundärwicklung des Trenntransformators 103 erfolgt über ein Hochpaßfilter, welches nur die verhältnismäßig hochfrequenten Informationssignale durchläßt.

Umgekehrt ist der Stromversorgung 111, welche die Schaltungskomponenten des "mobilen" Schaltungsteiles mit der notwendigen Betriebsspannung versorgt, über ein Tiefpaßfilter mit der Sekundärwicklung des Trenntransformators 103 verbunden, so daß also die hochfrequenten Informationsanteile der an der Sekundärwicklung befindlichen Spannung nicht zu der Stromversorgung gelangen können.

In ähnlicher Weise ist im "stationären" Teil der Schaltungsanordnung unterhalb der Trennlinie 102 das elektronische Vorschaltgerät 113 durch ein Tiefpaßfilter 122 von den hochfrequenten Spannungskomponenten an der Primärwicklung des Trenntransformators 103 abgetrennt.

Der IR-Empfänger 15 des Ausführungsbeispieles von Figur 1 ist in Figur 2 durch einen Demodulator 115 ersetzt, der über ein Hochpaßfilter 123 mit der Primärwicklung des Trenntransformators 103 verbunden ist.

Die Funktionsweise des Ausführungsbeispieles von Figur 2 entspricht vollständig derjenigen des Ausführungsbeispieles von Figur 1, mit dem einzigen Unterschied, daß die Übertragung der Informationssignale nicht mit Hilfe von IR-Licht sondern über den Trenntransformator 103 und die elektrischen Leitungen der beiden Schaltungsteile erfolgt.

Figur 2 zeigt im übrigen diejenige Ausgestaltung der Schaltungsanordnung, welche stationär in den Entkeimungsreaktor eingebaut ist. Die entsprechende werksseitig zum Kalibrieren der ausgelieferten Baueinheiten verwendete Schaltung würde zusätzlich einen über ein Hochpaßfilter mit der Primärwicklung des Trenntransformators 103 verbundenen Modulator umfassen; beide Komponenten sind in Figur 2 nicht dargestellt.

## Patentansprüche

1. Vorrichtung zum Entkeimen von Wasser, welches eine Sanitäreinrichtung durchströmt, mit
a) einem Entkeimungsreaktor;
b) einer UV-Lampe (1; 101);
c) einer Schaltungsanordnung zum Betreiben der UV-Lampe (1; 101), die ihrerseits umfasst:
ca) ein elektronisches Vorschaltgerät (13), welches dazu geeignet ist, aus der externen Versorgungsspannung die zum Betrieb der UV-Lampe (1; 101) erforderliche Betriebsspannung zuerzeugen;
cb) einen von der UV-Lampe (1; 101) bestrahlbaren Sensor (7; 107) für von der UV-Lampe ausgestrahltes Licht;
cc) einen Speicher (8;108), in dem ein für eine kleinste zulässige Lichtintensität stehender Minimalwert abspeicherbar ist;
cd) eine Vergleichseinrichtung (5; 105), welche den vom Sensor (7; 107) gemessenen Wert der Lichtintensität mit dem im Speicher (8; 108) abgelegten Minimalwert vergleicht und ein Alarmsignal abgibt, wenn der gemessene Wert den abgelegten Minimalwert terschreitet;
ce) eine von dem Alarmsignal angesteuerte Alarmeinrichtung (18; 118);
**dadurch gekennzeichnet, daß**
d) in dem Speicher (8; 108) ein zweiter Wert abspeicherbar ist, welcher für den Sollwert der Lichtintensität der UV-Lampe (1; 101) repräsentativ ist;
e) die Vergleichseinrichtung (5; 105) ein Nachführsignal abgibt, wenn der vom Sensor (7; 107) gemessene Wert der Lichtintensität unter den Sollwert abfällt;
f) eine Nachführeinrichtung (14; 114) vorgesehen ist, welche beim Auftreten des Nachführsignales das elektronische Vorschaltgerät (13; 113) die Betriebsspannung der UV-Lampe (1; 101) erhöhen läßt, bis wieder der Sollwert für die Lichtintensität erreicht ist.

2. Vorichtung nach Anspruch 1, **dadurch gekennzeichnet, daß** die Schaltungsanordnung durch einen Trenntransformator (3; 103) galvanisch in zwei Teile geteilt ist, von denen der eine stationär mit dem Entkeimungsreaktor und der andere baueinheitlich mit der entnehmbaren UV-Lampe (1; 101) verbunden ist.

3. Vorrichtung nach Anspruch 2, **dadurch gekennzeichnet, daß**
a) der Sensor (7; 107) sich in dem baueinheitlich mit der UV-Lampe (1; 101) verbundenen Teil der Schaltungsanordnung befindet;
b) die Vergleichseinrichtung (5; 105) in dem baueinheitlich mit der UV-Lampe (1; 101) verbundenen Schaltungsteil vorgesehen ist und als erster Mikroprozessor ausgebildet ist, welcher mit einer ersten Schaltungskomponente (9; 109) verbunden ist, die über die galvanische Trennung hinweg Informationen über das Ergebnis der in dem ersten Mikroprozessor (5; 105) geführten Vergleiche aussendet;
c) in dem stationär mit dem Entkeimungsreaktor verbundenen Teil der Schaltungsanordnung ein zweiter Mikroprozessor (14; 114) vorgesehen ist, der als die das Alarmsignal erzeugende Einrichtung und/oder als Nachführeinrichtung dient und mit einer zweiten Schaltungskomponente (15; 115) verbunden ist, welche die von der ersten Schaltungskomponente (9; 109) ausgesandten Informationssignale empfängt.

4. Vorrichtung nach Anspruch 3, **dadurch gekennzeichnet, daß** die Schaltungsanordnung in dem baueinheitlich mit der UV-Lampe (1; 101) verbundenen Teil eine dritte Schaltungskomponente (10; 110) enthält, welche über die galvanische Trennung hinweg Informationssignale empfangen kann und mit dem ersten Mikroprozessor (5; 105) verbunden ist, wobei der erste Mikroprozessor (5; 105) so programmiert ist, daß er den momentan vom Sensor (7; 107) gemessenen Wert in den Speicher (8; 108) einliest, wenn er von der dritten Schaltungskomponente (10; 110) ein entsprechendes Signal erhält.

5. Kalibriervorrichtung zur werksseitigen Kalibrierung einer der Entkeimung von Wasser, welches eine Sanitäreinrichtung durchströmt, dienenden Baueinheit, wobei die Baueinheit umfaßt :
a) eine UV-Lampe (1) ;
b) einen von der UV-Lampe (1) bestrahlbaren Sensor (7) für von der UV-Lampe (1) ausgestrahltes Licht;
c) einen Speicher (8), in dem ein für eine kleinste Lichtmenge stehender Minialwert und ein zweiter, für den Sollwert der Lichtintensität der UV-Lampe (1) repräsentativer Wert abspeicherbar sind;
d) einen ersten Mikroprozessor (5) ;
e) eine erste Schaltungskomponente (10), welche über eine galvanische Trennung hinweg Informationssignale empfangen kann und mit dem ersten Mikroprozessor (5) verbunden ist, wobei der erste Mikroprozessor (5) so programmiert ist, daß er den momentan vom Sensor (7) gemessenen Wert in den Speicher (7) einliest, wenn er von der Schaltungskomponente (10) ein entsprechendes Signal erhält;
wobei die Kalibriervorrichtung umfaßt:
f) einen in eine definierte räumliche Beziehung zu der zu kalibrierenden UV-Lampe (1) bringbare, geeichten Sensor (25) für von der UV-Lampe (1) ausgestrahltes Licht;
g) einen mit dem geeichten Sensor (25) in Verbindung stehenden zweiten Mikroprozessor (14) ;
h) ein mit dem zweiten Mikroprozessor (14) in Verbindung stehendes elektronisches Vorschaltgerät (13), welches dazu geeignet ist, eine zum Probebetrieb der UV-Lampe (1) verwendete variable Betriebsspannung zuerzeugen;
i) eine zweite Schaltungskomponente (19), die mit dem zweiten Mikroprozessor (14) in Verbindung steht und über die galvanische Trennung hinweg Informationen zur ersten Schaltungskomponente (10) aussenden kann,
wobei
k) der zweite Mikroprozessor (14) so programmiert ist, daß er
ka) die von dem elektronischen Vorschaltgerät (13) erzeugte Probebetriebsspannung so lange verändert, bis der geeichte Sensor (25) einen vorbestimmten Sollwert der Lichtintensität anzeigt, und daß er dann die zweite Schaltungskomponente (19) zum Aussenden eines ersten Informationssignales an die erste Schaltungskomponente (10) veranlaßt, worauf der erste Mikroprozessor (5) den momentan vom Sensor (7) gemessenen Wert der Lichtintensität als Sollwert in dem Speicher (8) abspeichert;
kb) die von dem elektronischen Vorschaltgerät (13) erzeugte Probebetriebsspannung so lange absenkt, bis der geeichte Sensor (25) einen für eine kleinste zulässige Lichtintensität stehenden Minimalwert anzeigt, und daß er dann die zweite Schaltungskomponente (19) zum Aussenden eines zweiten Informationssignals an die erste Schaltungskomponente (10) veranlaßt, worauf der erste Mikroprozessor (5) den momentan vom Sensor (7) gemessenen Wert der Lichtintensität als Minimalwert in dem Speicher (8) abspeichert.

6. Vorrichtung nach einem der Ansprüche 3 bis 5, **dadurch gekennzeichnet, daß** die Informationssignalverarbeitenden Schaltungskomponenten (9, 10, 15, 19) IR-Sender bzw. IR-Empfänger sind.

7. Vorichtung nach einem der Ansprüche 3 bis 5, **dadurch gekennzeichnet, daß** die informationssignalverarbeiten- den Schaltungskomponenten (109, 110, 115) Modulatoren bzw. Demodulatoren sind, welche jeweils über Hochpaßfilter (120, 123) galvanisch mit der Primär- bzw. Sekundärwicklung des Trenntransformators (103) verbunden sind.

## Claims

1. Apparatus for disinfecting water flowing through a sanitary device, with
a) a disinfecting reactor;
b) a UV lamp (1; 101);
c) a circuit arrangement for operating the UV lamp (1; 101), which arrangement in turn comprises:
ca) an electronic ballast (13) which is adapted to produce from the external supply voltage the operating voltage required to operate the UV lamp (1; 101);
cb) a sensor (7; 107), which can be irradiated by the UV lamp (1; 101), for light emitted by the UV lamp (1; 101);
cc) a memory (8; 108) in which a minimum value which represents a minimum permissible light intensity can be stored;
cd) a comparison device (5; 105) which compares the light intensity value which is measured by the sensor (7; 107) with the minimum value which is stored in the memory (8; 108) and delivers an alarm signal if the measured value falls below the stored minimum value;
ce) an alarm device (18; 118) which is activated by the alarm signal;
**characterised in that**
d) a second value which is representative of the desired value of the light intensity of the UV lamp (1; 101) can be stored in the memory (8; 108);
e) the comparison device (5; 105) delivers a follow-up signal if the light intensity value which is measured by the sensor (7; 107) falls below the desired value;
f) a follow-up device (14; 114) is provided which, upon the occurrence of the follow-up signal, causes the electronic ballast (13; 113) to increase the operating voltage of the UV lamp (1; 101) until the desired value for the light intensity is reached again.

2. Apparatus according to Claim 1, **characterised in that** the circuit arrangement is separated in d.c. terms by an isolating transformer (3; 103) into two parts, one of which is connected in a stationary fashion to the disinfecting reactor and the other of which is integrally connected to the removable UV lamp (1; 101).

3. Apparatus according to Claim 2, **characterised in that**
a) the sensor (7; 107) is located in the part of the circuit arrangement which is integrally connected to the UV lamp (1; 101) ;
b) the comparison device (5; 105) is provided in the circuit part which is integrally connected to the UV lamp (1; 101) and is formed as a first microprocessor which is connected to a first circuit component (9; 109) which sends out via the indirect coupling information on the result of the comparisons carried out in the first microprocessor (5; 105);
c) a second microprocessor (14; 114) is provided in the circuit arrangement which is connected in a stationary fashion to the disinfecting reactor, which microprocessor serves as the device which generates the alarm signal and/or as follow-up device and is connected to a second circuit component (15; 115) which receives the information signals sent out by the first circuit component (9; 109).

4. Apparatus according to Claim 3, **characterised in that** the circuit arrangement contains in the part which is integrally connected to the UV lamp (1; 101) a third circuit component (10; 110) which can receive information signals via the indirect coupling and is connected to the first microprocessor (5; 105), wherein the first microprocessor (5; 105) is programmed such that it reads the value measured at the time by the sensor (7; 107) into the memory (8; 108) when it receives a corresponding signal from the third circuit component (10; 110).

5. Calibrating apparatus for calibrating in the factory a construction unit which serves to disinfect water flowing through a sanitary device, wherein the construction unit comprises:
a) a UV lamp (1);
b) a sensor (7), which can be irradiated by the UV lamp (1), for light emitted by the UV lamp (1);
c) a memory (8) in which a minimum value which represents a minimum quantity of light and a second value which is representative of the desired value of the light intensity of the UV lamp (1) can be stored;
d) a first microprocessor (5);
e) a first circuit component (10) which can receive information signals via an indirect coupling and is connected to the first microprocessor (5), wherein the first microprocessor (5) is programmed such that it reads the value measured at the time by the sensor (7) into the memory (7) when it receives a corresponding signal from the circuit component (10);
wherein the calibrating apparatus comprises:
f) a calibrated sensor (25), which can be brought into a defined spatial relationship with the UV lamp (1) to be calibrated, for light which is emitted by the UV lamp (1) ;
g) a second microprocessor (14) which is connected to the calibrated sensor (25) ;
h) an electronic ballast (13) which is connected to the second microprocessor (14) and is adapted to produce a variable operating voltage which is used for a trial operation of the UV lamp (1) ;
i) a second circuit component (19) which is connected to the second microprocessor (14) and can send out information to the first circuit component (10) via the indirect coupling,
wherein
k) the second microprocessor (14) is programmed such that it
ka) varies the trial operating voltage which is produced by the electronic ballast (13) until the calibrated sensor (25) indicates a predetermined desired value of the light intensity, and that it then causes the second circuit component (19) to send out a first information signal to the first circuit component (10), whereupon the first microprocessor (5) stores the value of the light intensity measured at the time by the sensor (7) as desired value in the memory (8);
kb) lowers the trial operating voltage which is produced by the electronic ballast (13) until the calibrated sensor (25) indicates a minimum value which represents the minimum permissible light intensity, and that it then causes the second circuit component (19) to send out a second information signal to the first circuit component (10), whereupon the first microprocessor (5) stores the value of the light intensity measured at the time by the sensor (7) as desired value in the memory (8) ;

6. Apparatus according to any one of Claims 3 to 5, **characterised in that** the information signal processing circuit components (9, 10, 15, 19) are IR transmitters or IR receivers.

7. Apparatus according to any one of Claims 3 to 5, **characterised in that** the information signal processing circuit components (109, 110, 115) are modulators or demodulators which are each directly connected via highpass filters (120, 123) to the primary or secondary winding of the isolating transistor (103).

## Revendications

1. Dispositif pour désinfecter l'eau qui passe à travers une installation sanitaire, comprenant
a) un réacteur de désinfection ;
b) une lampe à UV (1 ; 101);
c) un circuit de commande de la lampe à UV (1; 101) qui lui-même comprend :
ca) un ballast électronique (13) qui permet de générer la tension nécessaire au fonctionnement de la lampe à UV (1 ; 101) à partir de la tension d'alimentation externe ;
cb) un capteur exposé au rayonnement de la lampe à UV (1 ; 101) mesurant la lumière émise par la lampe à UV ;
cc) une mémoire (8 ; 108) dans laquelle on peut mémoriser une valeur minimale représentative de la plus petite intensité lumineuse admissible ;
cd) un dispositif de comparaison (5 ; 105) qui compare la valeur d'intensité lumineuse mesurée par le capteur (7; 107) avec la valeur minimale enregistrée dans la mémoire (8 ; 108) et délivre un signal d'alarme si la valeur mesurée est inférieure à la valeur minimale enregistrée ;
ce) un dispositif d'alarme (18 ; 118) activé par le signal d'alarme ;
**caractérisé par le fait que**
d) on peut mémoriser dans la mémoire (8 ; 108) une deuxième valeur qui est représentative de la valeur nominale de l'intensité lumineuse de la lampe à UV (1 ; 101) ;
e) le dispositif de comparaison (5 ; 105) délivre un signal d'asservissement quand la valeur de l'intensité lumineuse mesurée par le capteur (7; 107) devient inférieure à la valeur nominale ;
f) il est prévu un dispositif d'asservissement (14; 114) qui, lorsque le signal d'asservissement est présent, fait en sorte que le ballast électronique (13 ; 113) élève la tension de fonctionnement de la lampe à UV (1 ; 101) jusqu'à ce que la valeur nominale de l'intensité lumineuse soit de nouveau atteinte.

2. Dispositif selon la revendication 1, **caractérisé par le fait que** le circuit est séparé galvaniquement en deux parties par un transformateur de découplage (3 ; 103), une partie étant reliée de manière fixe au réacteur de désinfection et l'autre formant une unité avec la lampe à UV (1 ; 101) amovible.

3. Dispositif selon la revendication 2, **caractérisé par le fait que**
a) le capteur (7 ; 107) se trouve dans la partie du circuit formant une unité avec la lampe à UV (1; 101);
b) le dispositif de comparaison (5 ; 105) est prévu dans la partie du circuit formant une unité avec la lampe à UV (1 ; 101) et est constitué d'un premier microprocesseur relié à un premier composant de circuit (9 ; 109) qui envoie, par-delà la séparation galvanique, des informations sur le résultat des comparaisons effectuées dans le premier microprocesseur (5 ; 105) ;
c) il est prévu dans la partie du circuit reliée de manière fixe au réacteur de désinfection un deuxième microprocesseur (14 ; 114) qui sert de dispositif générant le signal d'alarme et/ou de dispositif d'asservissement et est relié à un deuxième composant de circuit (15 ; 115) qui reçoit les informations envoyées par le premier composant de circuit (9 ; 109).

4. Dispositif selon la revendication 3, **caractérisé par le fait que** le circuit dans la partie formant une unité avec la lampe à UV (1 ; 101) contient un troisième composant de circuit (10; 110) qui peut recevoir des informations par-delà la séparation galvanique et est relié au premier microprocesseur (5 ; 105), le premier microprocesseur (5 ; 105) étant programmé de manière à lire dans la mémoire (8 ; 108) la valeur instantanée mesurée par le capteur (7 ; 107) quand il reçoit un signal ad hoc du troisième composant de circuit (10; 110).

5. Dispositif d'étalonnage pour l'étalonnage en usine d'une unité servant à la désinfection de l'eau qui passe à travers une installation sanitaire, l'unité comprenant :
a) une lampe à UV (1) ;
b) un capteur (7) exposé au rayonnement de la lampe à UV (1) mesurant la lumière émise par la lampe à UV (1) ;
c) une mémoire (8) dans laquelle on peut mémoriser une valeur minimale représentative de la plus petite intensité lumineuse et une deuxième valeur représentative de la valeur nominale de l'intensité lumineuse de la lampe à UV (1) ;
d) un premier microprocesseur (5) ;
e) un premier composant de circuit (10) qui peut recevoir des signaux d'information par-delà une séparation galvanique et est relié au premier microprocesseur (5), le premier microprocesseur (5) étant programmé de manière à lire dans la mémoire (8) la valeur instantanée mesurée par le capteur (7) quand il reçoit un signal ad hoc du troisième composant de circuit (10) ;
le dispositif d'étalonnage comprenant :
f) un capteur étalonné (25), pouvant être mis dans une position définie par rapport à la lampe à UV (1) à étalonner, mesurant la lumière émise par la lampe à UV (1) ;
g) un deuxième microprocesseur (14) en relation avec le capteur étalonné (25) ;
h) un ballast électronique (13) en relation avec le deuxième microprocesseur (14), qui permet de générer une tension de fonctionnement variable pour l'essai de la lampe à UV (1) ;
i) un deuxième composant de circuit (19) qui est en relation avec le deuxième microprocesseur (14) et peut envoyer des informations au premier composant de circuit (10) par-delà la séparation galvanique,
k) le deuxième microprocesseur (14) étant programmé de telle manière
ka) qu'il modifie la tension d'essai générée par le ballast électronique (13) jusqu'à ce que le capteur étalonné (25) indique une valeur nominale prédéfinie de l'intensité lumineuse et qu'il provoque alors l'envoi par le deuxième composant de circuit (19) d'un premier signal d'information au premier composant de circuit (10), suite à quoi le premier microprocesseur (5) mémorise la valeur instantanée de l'intensité lumineuse mesurée par le capteur (7) en tant que valeur nominale dans la mémoire (8);
kb) qu'il abaisse la tension d'essai générée par le ballast électronique (13) jusqu'à ce que le capteur étalonné (25) indique une valeur minimale représentative de la plus petite intensité lumineuse admissible et qu'il provoque alors l'envoi par le deuxième composant de circuit (19) d'un deuxième signal d'information au premier composant de circuit (10), suite à quoi le premier microprocesseur (5) mémorise la valeur instantanée de l'intensité lumineuse mesurée par le capteur (7) en tant que valeur minimale dans la mémoire (8).

6. Dispositif selon l'une des revendications 3 à 5, **caractérisé par le fait que** les composants de circuit (9, 10, 15, 19) traitant les signaux d'information sont des émetteurs et récepteurs à infrarouge.

7. Dispositif selon l'une des revendications 3 à 5, **caractérisé par le fait que** les composants de circuit (109, 110, 115) traitant les signaux d'information sont des modulateurs ou des démodulateurs qui sont reliés galvaniquement à l'enroulement primaire ou secondaire du transformateur de découplage (103) par des filtre passe-haut (120, 123).
